# EUROPÄISCHE PATENTSCHRIFT

(11) **EP 1 606 093 B1**
(45) Veröffentlichungstag und Bekanntmachung des Hinweises auf die Patenterteilung: **10.09.2008**
(21) Anmeldenummer: 04719985.6
(22) Anmeldetag: 12.03.2004
(51) Int. Cl.: B29C 41/18, B29C 41/22

(54) **HERSTELLUNGSVERFAHREN FÜR KUNSTSTOFFHÄUTE DURCH PULVERSINTERN UND ENTSPRECHENDES SINTERWERKZEUG**
METHOD FOR THE PRODUCTION OF PLASTIC SKINS BY POWDER SINTERING AND CORRESPONDING SINTERING TOOL
PROCEDE DE PRODUCTION DE PEAUX EN MATIERE PLASTIQUE PAR FRITTAGE DE POUDRE, ET OUTIL DE FRITTAGE CORRESPONDANT

(30) Priorität: 21.03.2003 DE 10313811
(43) Veröffentlichungstag der Anmeldung: 21.12.2005
(73) Patentinhaber: Faurecia Innenraum Systeme GmbH, 76767 Hagenbach (DE)
(72) Erfinder: NYSSEN, Siegfried, 94315 Straubing (DE)
(74) Vertreter: Pfenning, Meinig & Partner GbR
(86) Internationale Anmeldenummer: PCT/EP2004/002603
(87) Internationale Veröffentlichungsnummer: WO 2004/082917

(56) Entgegenhaltungen:
- EP-A- 0 367 636
- US-A- 5 225 261
- US-B1- 6 280 666
- US-B1- 6 524 509
- PATENT ABSTRACTS OF JAPAN Bd. 2000, Nr. 07, 29. September 2000 (2000-09-29) -& JP 2000 108148 A (INOAC CORP), 18. April 2000 (2000-04-18)
- PATENT ABSTRACTS OF JAPAN Bd. 1998, Nr. 09, 31. Juli 1998 (1998-07-31) & JP 10 095250 A (TOYOTA MOTOR CORP), 14. April 1998 (1998-04-14)
- PATENT ABSTRACTS OF JAPAN Bd. 012, Nr. 437 (M-765), 17. November 1988 (1988-11-17) & JP 63 172618 A (INOUE MTP CO LTD), 16. Juli 1988 (1988-07-16)
- PATENT ABSTRACTS OF JAPAN Bd. 017, Nr. 002 (M-1348), 5. Januar 1993 (1993-01-05) -& JP 04 235008 A (KASAI KOGYO CO LTD), 24. August 1992 (1992-08-24)
- PATENT ABSTRACTS OF JAPAN Bd. 015, Nr. 203 (M-1116), 24. Mai 1991 (1991-05-24) & JP 03 055219 A (INOATSUKU CORP:KK), 11. März 1991 (1991-03-11)

## Beschreibung

Die Erfindung betrifft ein Herstellungsverfahren für Kunststoffhäute durch Pulversintern nach dem Oberbegriff des Hauptanspruchs und ein entsprechendes Sinterwerkzeug nach dem Oberbegriff des Anspruchs 8. .

Gattungsgemäße Herstellungsverfahren dienen zur Herstellung von üblicherweise weichen Kunststoffhäuten, welche als Oberflächendekore für Kunststoffformteile, wie z.B. Kraftfahrzeug-Innenverkleidungen, insbesondere Instrumententafeln, Verwendung finden können. Um ein solches Kunststoffformteil zu bilden, können derartige Kunststoffhäute hinterspritzt oder hinterschäumt werden und dabei gegebenenfalls mit einem Träger als zusätzlichem Bauteil in Verbindung gebracht werden. Bei üblichen Pulversinterverfahren wird ein Abformwerkzeug mit einer Form, die einer für die Kunststoffhaut bzw. ein entsprechendes Kunststoffformteil gewünschten Form entspricht, durch Heizen auf eine Temperatur gebracht, die über dem Schmelzpunkt eines verwendeten Kunststoffs liegt, und auf einen Pulverkasten aufgesetzt, der den Kunststoff in Form von Pulver enthält. Anschließend kann der Pulverkasten und das Abformwerkzeug so gedreht werden, dass das Pulver in das Abformwerkzeug fällt, wo es durch Sintern, eventuell nach mehrfacher Wiederholung beschriebener Schritte, die Kunststoffhaut bildet. Nicht aufgeschmolzene Pulverreste können jeweils nach einer weiteren Drehung von Pulverkasten und Abformwerkzeug in den Pulverkasten zurückfallen.

Bei jüngeren Anwendungen von Kunststoffhäuten als Oberflächendekore werden bereichsweise unterschiedliche Oberflächeneigenschaften gewünscht, insbesondere eine Absetzung von Teilbereichen durch eine andere Farbe. Um das mit einem Pulversinterverfahren beschriebener Art zu erreichen, ist es bekannt, einen Teilbereich des Abformwerkzeugs während eines ersten Bepulverungsschritts für das Pulver unzugänglich zu machen, so dass eine erste Kunststoffschicht entsteht, welche diesen Teilbereich ausspart, und dann einen zweiten Bepulverungsschritt mit einem anderen Kunststoff folgen zu lassen, bei dem auch der Teilbereich bepulvert wird und eine zweite Kunststoffschicht gewünschter, von der ersten Kunststoffschicht abweichender Oberflächeneigenschaften entsteht. Ein Aussparen des Teilbereichs beim ersten Bepulverungsschritt wird bei entsprechenden Herstellungsverfahren nach dem Stand der Technik dadurch erreicht, dass eine eventuell aufblasbare Dichtung längs einer den Teilbereich begrenzenden Trennlinie auf das Abformwerkzeug oder auf einen längs der Trennlinie auf dem Abformwerkzeug angeordneten Trennsteg aufgedrückt wird. Dazu sind diese Dichtungen auf einer Berandung einer zusätzlichen Wand des Pulverkastens angeordnet, wodurch eine die entstehende Kunststoffhaut aufnehmende Oberfläche des Abformwerkzeugs in verschiedene Bereiche unterteilt wird. Für den ersten Bepulverungsschritt hält man dann mindestens einen der Bereiche frei von Pulver, für den zweiten Bepulverungsschritt verwendet man üblicherweise einen anderen Pulverkasten, der dann keine derartige Dichtung aufweisen muss.

Das beschriebene Herstellungsverfahren bringt verschiedene Nachteile mit sich. Es erfordert einen ausgesprochen aufwendig gestalteten Pulverkasten mit mindestens einer zusätzlichen Wand und einer darauf aufgesetzten Dichtung, für die sehr enge geometrische Toleranzen einzuhalten sind, um eine wirksame Abdeckung des Teilbereichs des Abformwerkzeugs zu erreichen. Selbst bei einem Werkzeug hoher Präzision sind Abdichtungsmängel praktisch nicht auszuschließen, beispielsweise durch ein nicht ganz exakt auf den Pulverkasten aufgesetztes Abformwerkzeug, wodurch es beim ersten Bepulverungsschritt zu Pulververschleppungen kommen kann. Schon bei Trennlinien einfacher Geometrie ist damit eine Produktion von Ausschuss fast unvermeidbar. Sehr problematisch wird ein Herstellungsverfahren nach dem Stand der Technik, sobald eine Trennlinie zwischen Oberflächenbereichen verschiedener Eigenschaften einer dreidimensionalen Kontur folgen soll. Schon leichte Krümmungen, wie sie beispielsweise an Hutzen von Instrumententafeln vorliegen können, führen zu einer Ausschussproduktion von etwa 20%.

Ein Verfahren der zuletzt beschriebenen Art ist beispielsweise in der Druckschrift US 6 280 666 B1 offenbart.

Aus der Druckschrift JP 2000 108148 A ist ein Herstellungsverfahren für Kunststoffhäute mit einem entsprechenden Sinterwerkzeug bekannt, bei dem zu einem ganz anderen Zweck, nämlich zum Sparen von Kunststoffmaterial durch Vermeiden der Herstellung einer Kunststoffhaut mit Übergröße, die nachher ausgeschnitten oder ausgestanzt werden müsste ein Teilbereich - hier ein Randbereich - des Abformwerkzeugs durch eine Dichtungsvorrichtung für das verwendete Pulver unzugänglich gemacht wird. Als Dichtungsvorrichtung dient dort eine Maske, die mit zwei Dichtungsrändern in jeweils eine Nut eingeklemmt wird und dadurch einen zwischen den beiden Nuten verbleibenden stegartigen Teil des Abformwerkzeugs überdeckt.

Ein anderes Sinterverfahren zur Herstellung von Kunststoffhäuten bei dem ein Teilbereich des entsprechenden Abformwerkzeugs bei einem ersten Bepulverungsschritt abgedeckt wird ist in der Druckschrift JP 10 0095250 A gezeigt. Zum Abdecken des Teilbereichs wird dort eine Schablone vorgeschlagen, die sich jedoch nachteiligerweise nicht sicher auf dem Abformwerkzeug befestigen lässt.

Der Erfindung liegt also die Aufgabe zugrunde, ein Herstellungsverfahren und ein entsprechendes Sinterwerkzeug zu entwickeln, mit denen die zuvor genannten Nachteile vermieden werden können. Insbesondere soll möglichst einfach eine sichere, Pulververschleppungen verhindernde Abtrennung eines Teilbereichs des Abformwerkzeugs für einen ersten Bepulverungsschritt auch bei komplizierteren Oberflächengeometrien des Abformwerkzeugs und dreidimensionalen Verläufen einer Berandung des Teilbereichs möglich sein.

Diese Aufgabe wird erfindungsgemäß gelöst durch ein Herstellungsverfahren und ein Sinterwerkzeug nach den kennzeichnenden Merkmalen des Anspruchs 1 bzw. 8 in Verbindung mit den Merkmalen des Oberbegriffs des Anspruchs 1 bzw. 8. Vorteilhafte Ausgestaltungen der Erfindung ergeben sich mit den Merkmalen der Unteransprüche.

Durch den längs einer üblicherweise in sich geschlossenen Berandung des Teilbereichs verlaufenden Trennsteg wird es möglich, den Teilbereich für den ersten Bepulverungsschritt mit einer Maske abzudecken, die ausschließlich am Abformwerkzeug befestigt wird. Die Maske, die nicht notwendigerweise jeder Oberflächenkontur des Abformwerkzeugs exakt folgen muss, wird dazu mit ihrem Dichtungsrand, vorzugsweise einem aufblasbaren Wulst, am Grenzsteg anliegend auf das Abformwerkzeug aufgeklemmt, so dass sie durch den Trennsteg gehalten wird. So wird eine ausgesprochen effektive Abdichtung des Teilbereichs mit einem sehr einfachen Sinterwerkzeug erreicht. Insbesondere kann ein einfacher Pulverkasten ohne zusätzliche Merkmale verwendet werden. Ohne großen Aufwand und bei gegenüber dem Stand der Technik deutlich reduzierten Auswirkungen toleranzbedingter Abweichungen wird durch die effektive Abdichtung beim ersten Bepulverungsschritt eine Pulververschleppung in den Teilbereich hinein sicher vermieden, auch wenn die Berandung des Teilbereichs einer dreidimensionalen Kontur folgt. Lässt man dem ersten Bepulverungsschritt nach Entfernen der Maske einen weiteren Bepulverungsschritt mit einem anderen, sich beispielsweise in Farbe oder mechanischen Eigenschaften unterscheidenden Kunststoff folgen, lassen sich so unter effektiver Vermeidung von Ausschuss Kunststoffhäute herstellen, die in einem Teilbereich entsprechend abweichende Eigenschaften haben, wobei verglichen mit dem Stand der Technik allgemeinere Verläufe von Trennlinien zwischen Bereichen verschiedener Farbe oder sonstiger Eigenschaften möglich sind. Dabei kann ein einzelner hier als Bepulverungsschritt bezeichneter Herstellungsschritt ein Aufbringen von Pulver auf das erwärmte Abformwerkzeug, ein Aufschmelzen und ein Entfernen überschüssigen Pulvers auch in mehrfacher Abfolge beinhalten, beispielsweise durch wiederholte Drehung von Pulverkasten und Abformwerkzeug.

Verglichen mit einer Herstellung zweifarbiger oder sich anderweitig bereichsweise in Oberflächeneigenschaften unterscheidender Kunststoffteile aus mehreren zusammengesetzten Teilen hat eine Verwendung einer mit dem beschriebenen Herstellungsverfahren hergestellten Kunststoffhaut mit in zumindest einem Teilbereich abweichender Oberflächeneigenschaft den Vorteil, dass eine einteilige Ausführung möglich ist, wodurch eine Ursache für unerwünschtes Klappern oder Quietschen ausgeschlossen werden kann. Gegenüber anderen Möglichkeiten, Kunststoffteile mit zweifarbigen weichen Oberflächen herzustellen, wie durch teilweises Lackieren der Oberfläche oder durch Verschweißen zweier einfarbiger Kunststoffhautteile hat die Erfindung den Vorteil eines erheblich reduzierten Aufwands.

Abgesehen von einer Herstellung zweifarbiger oder anderweitig bereichsweise in ihren Eigenschaften wechselnder Kunststoffhäute ist das beschriebene Verfahren auch von Vorteil für eine Herstellung von Kunststoffhäuten mit Aussparungen. Verglichen mit einem nachträglichen Ausschneiden oder Ausstanzen eines auszusparenden Teilbereichs können mit dem hier beschriebenen Herstellungsverfahren in einem solchen Fall ganz beträchtliche Mengen an Material eingespart werden.

Vorgeschlagen wird also ein vorteilhaftes Herstellungsverfahren für Kunststoffhäute durch Pulversintern, bei dem Pulver auf ein Abformwerkzeug aufgebracht wir, wo es durch Sintern eine Kunststoffhaut bildet, wobei ein Teilbereich des Abformwerkzeugs zumindest bei einem ersten Bepulverungsschritt durch eine Dichtungsvorrichtung für das Pulver unzugänglich gemacht wird und die als Maske ausgeführte Dichtungsvorrichtung für den ersten Bepulverungsschritt mit einem aufblasbaren Dichtungsrand an einem längs einer Berandung des Teilbereichs verlaufenden Trennsteg angelegt wird, wobei die Maske dadurch bei typischen Ausführungen der Erfindung ausschließlich am Abformwerkzeug befestigt wird. Das Aufbringen des Pulvers auf das Abformwerkzeug kann durch eine Drehung des Abformwerkzeugs - typischerweise gemeinsam mit einem Pulverkasten - unter Ausnutzung der Schwerkraft und/oder einer Zentrifugalkraft geschehen.

Eine noch sicherere Befestigung der Maske auf dem Abformwerkzeug kann man bei dem beschriebenen Herstellungsverfahren erzielen, wenn der Trennsteg hinterschnittig ist, so dass er durch einen Überhang zum Teilbereich hin eine nach dorthin offene Nut bildet. Zum Anbringen der Maske auf dem Abformwerkzeug kann dann der Dichtungsrand in diese Nut eingebracht werden, so dass er in der Nut am Trennsteg anliegt und ein Entgleiten der Maske durch eine damit formschlüssige Verbindung verhindert wird.

Als Material für die Maske eignet sich Silikon besonders gut, dessen elastische Eigenschaften ein Befestigen der Maske auf dem Abformwerkzeug erleichtern und das, insbesondere wenn die Maske einen aufblasbaren Dichtungsrand hat, eine sehr gute Abdichtung des Teilbereichs erlaubt. Zum Aufblasen des Dichtungsrands kann die Maske eine vorzugsweise abkoppelbare Zuführung für Druckluft oder dergleichen aufweisen.

Das Abformwerkzeug, das durch eine entsprechende dreidimensionale Konturierung einer die entstehende Kunststoffhaut aufnehmenden Oberfläche die Herstellung einer für eine spätere Verwendung als Oberflächendekor eines Formteils geeignet vorgeformten Kunststoffhaut mit gegebenenfalls einer abhängig vom gewählten Verlauf des Trennstegs ebenfalls einer dreidimensionalen Kontur folgenden Trennlinie zwischen Oberflächenbereichen verschiedener Eigenschaften erlaubt, kann zur Aufnahme der entstehenden Kunststoffhaut eine die Kontur vorgebende Schale mit einer Wandstärke von zwischen 2 mm und 6 mm aufweisen. Bei einer Wandstärke der Schale von zwischen 2 mm und 4 mm erhält man einen besonders guten Kompromiss von hinreichend hoher Stabilität und gleichzeitig nicht zu hoher Wärmekapazität, wodurch ein aufwandsarmes Erwärmen und Abkühlen zum Bepulvern, Sintern und anschließenden Aushärten möglich wird.

Das Abformwerkzeug oder die im vorhergehenden Absatz beschriebene Schale kann aus Nickel hergestellt sein, einem Material, das dafür besonders geeignet ist, weil es ein leichtes Ablösen der fertigen Kunststoffhaut vom Abformwerkzeug unter Vermeidung von Schäden erlaubt. Von Vorteil ist ferner neben der guten Wärmeleitfähigkeit von Nickel auch die Möglichkeit einer besonders einfachen Herstellung eines entsprechenden Abformwerkzeugs. Eine solche Nickelschale kann z.B. durch galvanische Abscheidung oder durch Nickeldampfauftragung auf einer Abscheideform erzeugt werden. Auch der Trennsteg auf dem Abformwerkzeug lässt sich dabei sehr einfach realisieren, beispielsweise indem man ein fertiges Stegprofil aus Nickel so in die Abscheideform einbringt, dass sich abscheidendes Nickel auf das Stegprofil aufwächst, wobei das Stegprofil den Trennsteg des fertigen Sinterwerkzeugs bildet. Eine andere Möglichkeit bietet ein Aufschweißen des Trennstegs aus Nickel auf einen plan geschliffenen Stegstumpf. Auch andere Metalle ähnlicher Eigenschaften wie z.B. Kupfer kommen für das Abformwerkzeug in Frage, bei anderen Herstellungsmethoden für das Abformwerkzeug auch als Legierungen.

Eine zweckmäßige Weiterentwicklung des beschriebenen Sinterwerkzeugs sieht vor, dass das Abformwerkzeug zweiwandig ist, also z.B. zwei ähnlich geformte Schalen in einem geringen Abstand voneinander aufweist. Ein dadurch entstehender Hohlraum zwischen den zwei Schalen kann zur Führung eines Heizmittels dienen, wodurch sich eine zum Sintern erforderliche Erwärmung des Abformwerkzeugs sehr praktisch erreichen lässt, wozu andernfalls aufwendige weitere Verfahrensschritte wie z.B. ein Einbringen des Abformwerkzeugs in einen Heizofen nötigen wären. Als Heizmittel eignet sich beispielsweise Öl. Für ein Abkühlen des Abformwerkzeugs nach dem Bepulvern zum Aushärten der Kunststoffhaut kann auf gleiche Weise kaltes Öl oder ein anderer vorzugsweise flüssiger und Korrosion vermeidender stoff als Kühlmittel dienen.

Zweckmäßigerweise kombiniert man das Abformwerkzeug mit einem Pulverkasten, auf den das Abformwerkzeug möglichst dicht aufsetzbar ist. Zur Vereinfachung des beschriebenen Herstellungsverfahrens kann das Sinterwerkzeug um eine horizontale Achse drehbar gelagert sein, beispielsweise durch eine Anordnung des Abformwerkzeugs in einem Drehrahmen.

Wenn man die die entstehende Kunststoffhaut aufnehmende Oberfläche des Abformwerkzeugs innerhalb und außerhalb des Teilbereichs mit unterschiedlichen Narbungen ausführt, kann man mit dem beschriebenen Herstellungsverfahren Kunststoffhäute erzeugen, die sich in scharf begrenzten Bereichen nicht nur in ihrer Farbe oder anderen Materialeigenschaften wie z.B. haptischen Eigenschaften unterscheiden, sondern in diesen Bereichen auch unterschiedliche Oberflächennarbungen aufweisen. Eine die Oberfläche eines Kunststoffteils in verschiedene Bereiche gliedernde Wirkung kann dadurch noch verstärkt werden. Möglich ist natürlich auch der Fall, dass das Abformwerkzeug nur innerhalb oder nur außerhalb des Teilbereichs genarbt ist, man erhält dann bereichsweise genarbte und bereichsweise glatte Kunststoffhäute.

Um für den ersten Bepulverungsschritt eine sichere Befestigung der Maske und damit eine gute Abdeckung des Teilbereichs zu gewährleisten, ist der Trennsteg vorzugsweise mit einer Höhe von zwischen 2 mm und 7 mm auszuführen. Ein zu hoher Trennsteg ist zu vermeiden, damit kein zu großer Materialüberschuss an der Trennlinie der fertigen Kunststoffhaut entsteht. Besonders gute Ergebnisse erzielt man bei einer Höhe des Trennstegs von zwischen 3 mm und 5 mm. Die durch einen hinterschnittigen Trennsteg gebildete Nut kann für ein sicheres Einklemmen der Maske eine Tiefe von zwischen 0,2 mm und 2 mm haben, vorzugsweise zwischen 0,3 mm und 1 mm, damit bei einem weiteren Bepulverungsschritt ohne Maske für eine Erzeugung einer lückenlosen Kunststoffhaut auch die Nut vom Pulver erreicht wird. Für eine möglichst scharfe Trennlinie zwischen den verschiedenen Bereichen der entstehenden Kunststoffhaut soll der Trennsteg nicht zu breit sein. Ein dabei immer noch hinreichend stabiler Trennsteg kann eine Breite von zwischen 1 mm und 6 mm, vorzugsweise zwischen 2 mm und 4 mm haben.

Der Dichtungsrand der Maske ist vorteilhafterweise dem Trennsteg entsprechend zu dimensionieren. In aufgeblasenem Zustand kann der Dichtungsrand z.B. einen Durchmesser von zwischen 5 mm und 20 mm, vorzugsweise zwischen 10 mm und 15 mm haben. In anderen Bereichen dagegen kann die Maske auch eine geringere Dicke haben, wobei aber darauf zu achten ist, dass auf die Maske fallendes Pulver dort nicht aufschmelzen soll, was sich durch eine wiederum nicht zu dünne Maske verhindern lässt. Möglich ist zur Vermeidung eines Sinterns des auf die Maske fallenden Pulvers auch eine Anordnung eines Wärmeschilds auf der Maske, damit ist eine Dicke der Maske von bis zu 20 mm zweckmäßig.

Zur Bildung eines Kunststoffteils, beispielsweise einer Instrumententafel oder eines anderen Innenverkleidungsteils für Kraftfahrzeuge, mit einer mit dem beschriebenen Herstellungsverfahren hergestellten Kunststoffhaut als Oberflächendekor kann die Kunststoffhaut hinterschäumt werden. Als Hinterschäummasse ist thermoplastisches Polyurethan besonders gut geeignet. Beim Hinterschäumen kann die Kunststoffhaut mit einem im gleichen Arbeitsschritt umschäumten oder angeschäumten Träger, üblicherweise einem Kunststoffträger, in Verbindung gebracht werden, der dem Kunststoffteil eine erhöhte Stabilität und Tragfähigkeit verleiht. Eine dabei entstehende Schaumschicht hinter der Kunststoffhaut hat vorzugsweise eine Dicke von 3 mm und 10 mm, damit lassen sich Kunststoffteile realisieren, die weder zu schwer noch zu empfindlich sind.

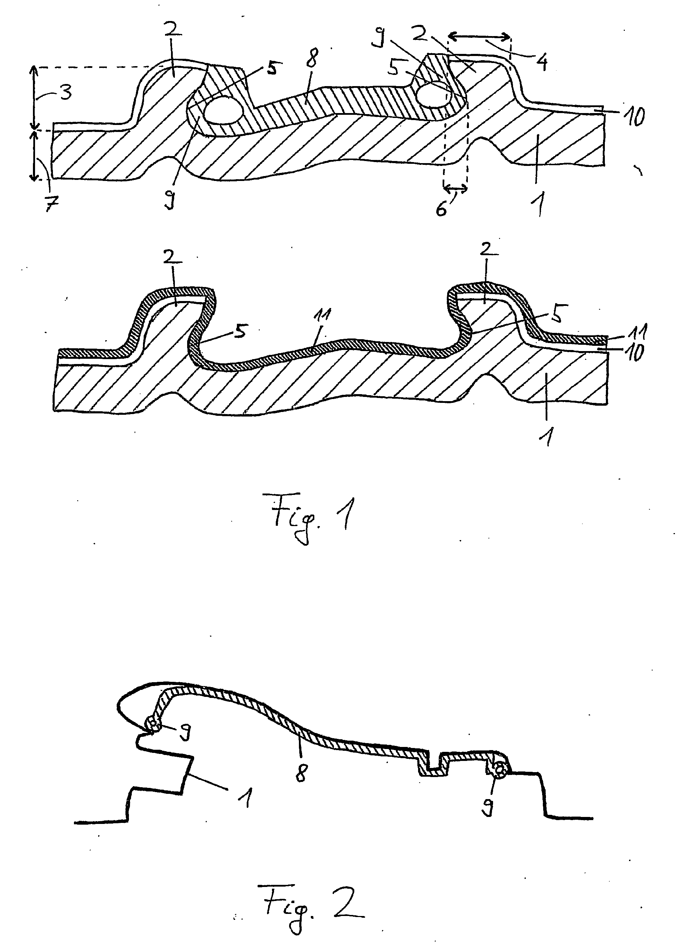

Die Erfindung wird anhand von in den Figuren 1 und 2 abgebildeten Ausführungsbeispielen erläutert. Es zeigt
- Fig. 1: zwei aufeinander folgende Verfahrensschritte eines erfindungsgemäßen Herstellungsverfahrens, wobei ein Sinterwerkzeug und eine entstehende Kunststoffhaut als Querschnitt gezeigt sind, und
- Fig. 2: ebenfalls als Querschnitt ein Sinterwerkzeug zur Herstellung einer Kunststoffhaut für eine Instrumententafelverkleidung.

In der Fig. 1 ist ein Abformwerkzeug 1 zu erkennen, das einen hinterschnittigen Trennsteg 2 aufweist, wobei der Trennsteg 2 eine geschlossene Umrandung eines Teilbereichs auf dem Abformwerkzeug 1 bildet. Der Trennsteg 2 hat eine Höhe 3 von etwa 4 mm, eine Breite 4 von etwa 3 mm und bildet durch einen Überhang zum Teilbereich hin eine Nut 5 mit einer Nuttiefe 6 von ungefähr 0,5 mm. Das Abformwerkzeug 1 selbst, von dem in der Figur nur ein Ausschnitt zu sehen ist, besteht aus Nickel und hat eine Wandstärke 7 von etwa 3 mm. Das Abformwerkzeug 1 bildet insgesamt eine schalenartige, offene Form mit einer Oberflächenkontur, die einer für eine herzustellende Kunststoffhaut gewünschten Kontur entspricht. Maßgeblich ist dafür im Normalfall eine von einem Kunststoffformteil vorgegebene Oberflächenkontur, für welches die Kunststoffhaut als Oberflächendekor dienen soll. Auch der Trennsteg 2 kann einen Verlauf, in den abgebildeten Querschnitten im Wesentlichen senkrecht zur Abbildungsebene, haben, der einer dreidimensionalen Kontur folgt.

Für den in der Fig. 1 oben dargestellten Verfahrensschritt wird eine Maske 8 aus Silikon mit einem aufblasbaren Dichtungsrand 9 so auf dem Abformwerkzeug 1 befestigt, dass die Maske 8 den Teilbereich, der vom Trennsteg 2 umgeben ist, abdeckt. Die Maske 8 wird dabei ausschließlich am Abformwerkzeug 1 befestigt und dazu mit dem Dichtungsrand 9 in die Nut 5 geklemmt. Durch ein Aufblasen des Dichtungsrands 9, der damit einen Durchmesser von etwa 10 mm bekommt, erhält man eine sichere Befestigung der Maske 8 auf dem Abformwerkzeug 1 und eine gute Abdichtung zwischen dem Dichtungsrand 9 und der Nut 5 bzw. dem Trennsteg 2. Die Maske 8, die eine dem Teilbereich entsprechende Form hat, hat abgesehen vom dickeren Dichtungsrand eine Dicke von etwa 3 mm.

Durch das Herstellungsverfahren, von dem in der Fig. 1 zwei Verfahrensschritte dargestellt sind, kann man eine Kunststoffhaut herstellen, die in einem Teilbereich eine andere Farbe hat als außerhalb des Teilbereichs oder sich auch in anderen Eigenschaften wie z.B. haptischen Eigenschaften innerhalb des Teilbereichs abhebt. Dazu wird die Maske 8 für einen ersten Bepulverungsschritt auf dem Abformwerkzeug 1 befestigt, wie es in der Fig. 1 oben dargestellt ist. Nach einem Heizen des Abformwerkzeugs 1 auf eine Temperatur von etwa 250°C, beispielsweise durch Beblasen mit Heißluft einer Temperatur von etwa 400°C, wird das Abformwerkzeug 1 mit der Maske 8 auf einen in der Figur nicht abgebildeten Pulverkasten aufgesetzt. Der Pulverkasten enthält Kunststoff für den ersten Bepulverungsschritt in Pulverform, wobei der Schmelzpunkt dieses Kunststoffs unterhalb der Temperatur des aufgeheizten Abformwerkzeugs 1 liegt. Durch eine Drehung des Pulverkastens mit dem aufgesetzten Abformwerkzeug 1 um etwa 180° um eine horizontale Achse, um welche das Sinterwerkzeug für diesen Zweck drehbar gelagert ist, bewirkt, dass das Pulver auf das Abformwerkzeug 1 fällt, wo es aufgrund der hohen Temperatur des Abformwerkzeugs 1 durch Sintern eine erste Kunststoffschicht 10 bildet. Der durch die Maske 8 abgedeckte Teilbereich bleibt dabei frei von Kunststoff. Nach einer weiteren Drehung um etwa 180° fällt überschüssiges Pulver zurück in den Pulverkasten. Eine eventuelle einfache oder mehrfache Wiederholung beschriebener Schritte gibt der ersten Kunststoffschicht 10 eine gewünschte Dicke. Der in der Fig. 1 oben dargestellte Verfahrensschritt zeigt das Abformwerkzeug 1, die Maske 8 und die erste Kunststoffschicht 10 nach den bis jetzt beschriebenen Schritten.

Anschließend wird die Maske 8 entfernt, wozu der Dichtungsrand 9 entleert werden kann. Es folgt ein zweiter Bepulverungsschritt, der dem eben beschriebenen ersten Bepulverungsschritt gleicht, wobei aber ein anderer Kunststoff verwendet wird, der sich von dem für den ersten Bepulverungsschritt verwendeten Kunststoff z.B. durch eine andere Farbe unterscheidet. Durch die jetzt fehlende Maske 8 wird jetzt auch der zunächst abgedeckte Teilbereich auf dem Abformwerkzeug 1 vom Pulver erreicht. Zweckmäßigerweise kann man für den zweiten Bepulverungsschritt einen anderen Pulverkasten verwenden, der dem zuerst verwendeten Pulverkasten gleicht, aber Pulver eines anderen Kunststoffs enthält. Beim zweiten Bepulverungsschritt entsteht eine zweite Kunststoffschicht 11, die außerhalb des Teilbereichs eine Verbindung mit der ersten Kunststoffschicht 10 eingeht, innerhalb des Teilbereichs aber eine einzelne Lage bildet. Der in der Fig. 1 unten dargestellte Verfahrensschritt zeigt das Abformwerkzeug 1, die erste Kunststoffschicht 10 und die zweite Kunststoffschicht 11 zu diesem Zeitpunkt. Die erste Kunststoffschicht 10 und die zweite Kunststoffschicht 11 bilden zusammen eine Kunststoffhaut, welche, vorzugsweise nach einem Abkühlen des Abformwerkzeugs 1, vom Abformwerkzeug 1 abgenommen werden kann. Die fertige Kunststoffhaut hat durch die Abdeckung des Teilbereichs eines ersten Bepulverungsschritt eine zweifarbige Oberflächenstruktur oder eine sich in anderen Eigenschaften in mindestens einem Teilbereich abhebende Oberfläche. Wenn das Abformwerkzeug 1 innerhalb oder außerhalb des Teilbereich eine unterschiedlich genarbte Oberfläche hat, lässt sich eine weitere Kontrastierung verschiedener Bereiche auf der Kunststoffhaut durch unterschiedliche Narbungen realisieren.
Ein dem anhand der Figur 1 beschriebenen Herstellungsverfahren verwandtes Verfahren erhält man, wenn man den zweiten Bepulverungsschritt weglässt. Man bekommt damit eine Kunststoffhaut die eine im Teilbereich entsprechende Aussparung aufweist. Entsprechende Kunststoffhäute können z.B. Verwendung finden als Dekore für Verkleidungsteile, welche ein Feld freilassen sollen. Durch eine Verwendung des hiermit beschriebenen Herstellungsverfahrens erübrigt sich in dem Fall ein nachträgliches Ausschneiden oder Ausstanzen der Aussparung, wodurch sich unnötige Materialverluste vermeiden lassen bei zumindest einer deutlichen Reduzierung eines sonst unvermeidlich großen Stanzabfallvolumens.

Zur Herstellung eines Kunststoffformteils mit einer wie beschrieben hergestellten Kunststoffhaut als Oberflächendekor kann man die Kunststoffhaut z.B. mit Polyurethan hinterschäumen, zweckmäßigerweise bei gleichzeitiger Umschäumung eines Kunststoffträgers. Durch das beschriebene Herstellungsverfahren kann das fertige Kunststoffformteil eine dann beispielsweise zweifarbige zweifarbige Oberfläche haben mit einer Trennlinie zwischen Bereichen verschiedener Farbe, welche, falls das gewünscht ist, problemlos auch eine komplizierte und insbesondere einer dreidimensionalen Kontur folgende Geometrie haben kann.

In Fig. 2 ist ein vollständiges Abformwerkzeug 1 mit einer für einen ersten Bepulverungsschritt aufgesetzte Maske 2 als Querschnitt abgebildet. Das Abformwerkzeug 1 und die Maske 2 sind Bestandteil eines Sinterwerkzeugs zur Herstellung einer Kunststoffhaut, die als Oberflächendekor für eine Instrumententafelverkleidung dienen soll. Die Kunststoffhaut erhält dabei durch ein Verfahren der zuvor beschriebenen Art in einem durch die Maske 2 abgedeckten Bereich eine andere Farbe als außerhalb dieses Bereichs. Auch in dieser Figur ist ein aufblasbarer Dichtungsrand 9 der Maske 2, die wie im zuvor beschriebenen Fall aus Silikon gefertigt ist, zu sehen. Wie die Figur zeigt, muss die Maske in auf dem Abformwerkzeug 1 befestigtem Zustand nicht notwendigerweise jeder Kontur des Abformwerkzeugs 1 folgen. Die Maske 2 ist wieder durch Einklemmen in eine hier nicht sichtbare Nut 5, welche durch einen ebenfalls hier nicht erkennbaren hinterschnittigen Trennsteg 2 gebildet wird, auf dem Abformwerkzeug 1 befestigt. Das Abformwerkzeug 1, eine durch ein Elektroformverfahren in einer Galvanoschale hergestellte Nickelform mit einer Wandstärke von etwas 3 mm, hat eine Form, die in etwa einer fertigen Instrumententafelverkleidung entspricht. Der abgebildete Querschnitt entspräche bei einem fertigen Kraftfahrzeug einer in Fahrtrichtung senkrecht stehenden Ebene im Bereich einer in der Figur links liegenden Hutze, die zur Abdeckung von Instrumenten dient.

## Patentansprüche

1. Herstellungsverfahren für Kunststoffhäute durch Pulversintern, bei dem Pulver auf ein Abformwerkzeug (1) aufgebracht wird, wo es durch Sintern eine Kunststoffhaut bildet, wobei ein Teilbereich des Abformwerkzeugs (1) zumindest bei einem ersten Bepulverungsschritt durch eine Dichtungsvorrichtung für das Pulver unzugänglich gemacht wird, wobei ferner das Abformwerkzeug längs einer Berandung des Teilbereichs einen Trennsteg (2) aufweist und eine Maske (8) mit einem Dichtungsrand (9) als Dichtungsvorrichtung dient, wobei die Maske (8) beim ersten Bepulverungsschritt mit dem Dichtungsrand am Trennsteg (2) anliegt und ausschließlich am Abformwerkzeug (1) befestigt wird,
**dadurch gekennzeichnet,**
**dass** der Dichtungsrand (9) aufblasbar ist.

2. Herstellungsverfahren nach Anspruch 1, **dadurch gekennzeichnet, dass** dem ersten Bepulverungsschritt mindestens ein weiterer Bepulverungsschritt folgt, vorzugsweise zur Erzeugung einer Kunststoffschicht mit einer von einer durch den ersten Bepulverungsschritt entstehenden ersten Kunststoffschicht abweichenden Farbe, wobei die Maske für den weiteren Bepulverungsschritt entfernt wird.

3. Herstellungsverfahren nach einem der Ansprüche 1 oder 2, **dadurch gekennzeichnet, dass** der Trennsteg hinterschnittig ist und **dadurch** eine zum Teilbereich hin offene Nut (5) bildet, in welcher der Dichtungsrand beim ersten Bepulverungsschritt zu liegen kommt.

4. Herstellungsverfahren nach einem der Ansprüche 1 bis 3, **dadurch gekennzeichnet, dass** das Abformwerkzeug zumindest an einer die entstehende Kunststoffhaut aufnehmenden Oberfläche aus Nickel besteht.

5. Herstellungsverfahren nach einem der Ansprüche 1 bis 4, **dadurch gekennzeichnet, dass** der Dichtungsrand der Maske aus Silikon oder einem duroplastischen Elastomer besteht.

6. Herstellungsverfahren nach einem der Ansprüche 1 bis 5, **dadurch gekennzeichnet, dass** die Kunststoffhaut durch verschiedene Narbungen einer die entstehende Kunststoffhaut aufnehmenden Oberfläche des Abformwerkzeugs innerhalb und außerhalb des Teilbereichs Bereiche unterschiedlicher Narbung erhält.

7. Herstellungsverfahren nach einem der Ansprüche 1 bis 6, **dadurch gekennzeichnet, dass** die Kunststoffhaut durch eine dreidimensionale Kontur einer sie beim Pulversintern aufnehmenden Oberfläche des Abformwerkzeugs eine entsprechende dreidimensionale Kontur erhält, wobei gegebenenfalls durch einen dreidimensionalen Verlauf des Trennstegs auf der Kunststoffhaut eine dementsprechend dreidimensional verlaufende Trennlinie zwischen Oberflächenbereichen verschiedener Farbe und/oder Narbung entsteht.

8. Sinterwerkzeug (1) zur Herstellung von Kunststoffhäuten durch Pulversintern, das ein Abformwerkzeug mit einer Oberfläche zur Aufnahme einer entstehenden Kunststoffhaut sowie eine Dichtungsvorrichtung (8) zur Abtrennung eines Teilbereichs der Oberfläche aufweist, wobei das Abformwerkzeug (1) auf der Oberfläche längs einer Berandung des Teilbereichs einen Trennsteg (2) aufweist und wobei die Dichtungsvorrichtung (8) ausgeführt ist als Maske (8) mit einem Dichtungsrand (9), welche so an der Oberfläche zu befestigen ist, dass der Teilbereich durch die Maske (8) abgedeckt ist und der Dichtungsrand (9) am Trennsteg (2) anliegt, **dadurch gekennzeichnet, dass** der Dichtungsrand (9) aufblasbar ist.

9. Sinterwerkzeug nach Anspruch 8, **dadurch gekennzeichnet, dass** die Maske in an der Oberfläche befestigtem Zustand ausschließlich am Abformwerkzeug befestigt ist.

10. Sinterwerkzeug nach einem der Ansprüche 8 oder 9, **dadurch gekennzeichnet, dass** der Trennsteg hinterschnittig ist und eine zum Teilbereich hin offene Nut (5) bildet, in welcher die Maske in befestigtem Zustand mit dem Dichtungsrand am Trennsteg anliegt.

11. Sinterwerkzeug nach einem der Ansprüche 8 bis 10, **dadurch gekennzeichnet, dass** das Abformwerkzeug eine Schale mit einer Wandstärke von zwischen 2 mm und 6 mm, vorzugsweise zwischen 2 mm und 4 mm, zur Aufnahme der entstehenden Kunststoffhaut aufweist.

12. Sinterwerkzeug nach einem der Ansprüche 8 bis 11, **dadurch gekennzeichnet, dass** das Abformwerkzeug zweiwandig ist zur Führung eines vorzugsweise flüssigen Heizmittels und/oder Kühlmittels in einem Hohlraum zwischen zwei Wänden.

13. Sinterwerkzeug nach einem der Ansprüche 8 bis 12, **dadurch gekennzeichnet, dass** es mindestens einen Pulverkasten aufweist, auf den das Abformwerkzeug aufsetzbar ist, wobei das Sinterwerkzeug vorzugsweise um eine horizontale Achse drehbar gelagert ist.

14. Sinterwerkzeug nach einem der Ansprüche 8 bis 13, **dadurch gekennzeichnet, dass** das Abformwerkzeug zumindest an der Oberfläche aus Nickel besteht.

15. Sinterwerkzeug nach einem der Ansprüche 8 bis 14, **dadurch gekennzeichnet, dass** der Dichtungsrand der Maske aus Silikon oder einem duroplastischen Elastomer besteht.

16. Sinterwerkzeug nach einem der Ansprüche 8 bis 15, **dadurch gekennzeichnet, dass** die Maske eine Dicke von zwischen 1 mm und 6 mm, vorzugsweise zwischen 2 mm und 4 mm hat und/oder der Dichtungsrand im aufgeblasenen Zustand eine Dicke von zwischen 5 mm und 20 mm, vorzugsweise zwischen 10 mm und 15 mm hat.

17. Sinterwerkzeug nach einem der Ansprüche 8 bis 16, **dadurch gekennzeichnet, dass** der Trennsteg eine Höhe von zwischen 2 mm und 7 mm, vorzugsweise zwischen 3 mm und 5 mm und/oder eine Breite von zwischen 1 mm und 6 mm, vorzugsweise zwischen 2 mm und 4 mm hat.

18. Sinterwerkzeug nach einem der Ansprüche 10 bis 17, **dadurch gekennzeichnet, dass** die Nut eine Tiefe von zwischen 0,2 mm und 2 mm, vorzugsweise zwischen 0,3 mm und 1 mm hat.

19. Sinterwerkzeug nach einem der Ansprüche 8 bis 18, **dadurch gekennzeichnet, dass** die Oberfläche innerhalb und außerhalb des Teilbereichs unterschiedliche Narbungen aufweist.

20. Sinterwerkzeug nach einem der Ansprüche 8 bis 19, **dadurch gekennzeichnet, dass** die Oberfläche eine dreidimensionale Kontur hat.

21. Sinterwerkzeug nach einem der Ansprüche 8 bis 20, **dadurch gekennzeichnet, dass** der Trennsteg einen dreidimensionalen Verlauf hat.

## Claims

1. A method of producing plastics-material skins by powder sintering, in which the powder is applied to a moulding tool (1), where it forms a plastics-material skin as a result of sintering, wherein a partial region of the moulding tool (1) is made inaccessible to the powder by a sealing apparatus at least during a first pulverizing step, wherein furthermore the moulding tool has a separating web (2) along an edging of the partial region and a mask (8) with a sealing edge (9) is used as the sealing apparatus, wherein the mask (8) rests with the sealing edge against the separating web (2) during the first pulverizing step and is fastened exclusively on the moulding tool (1), **characterized in that** the sealing edge (9) is inflatable.

2. A production method according to Claim 1, **characterized in that** the first pulverizing step is followed by at least one further pulverizing step, preferably in order to produce a plastics-material layer with a colour which deviates from a first plastics-material layer resulting from the first pulverizing step, wherein the mask is removed for the further pulverizing step.

3. A production method according to one of Claims 1 and 2, **characterized in that** the separating web is undercut and, as a result, forms a groove (5) which is open towards the partial region and in which the sealing edge comes to rest during the first pulverizing step.

4. A production method according to any one of Claims 1 to 3, **characterized in that** the moulding tool consists of nickel at least on a surface receiving the plastics-material skin produced.

5. A production method according to any one of Claims 1 to 4, **characterized in that** the sealing edge of the mask consists of silicone or a thermosetting elastomer.

6. A production method according to any one of Claims 1 to 5, **characterized in that** the plastics-material skin receives regions of different patterning as a result of different patternings of a surface of the moulding tool which receives the resulting plastics-material skin inside and outside the partial region.

7. A production method according to any one of Claims 1 to 6, **characterized in that** as a result of a three-dimensional contour of a surface of the moulding tool which receives it during the powder sintering the plastics-material skin receives a corresponding three-dimensional contour, wherein a three-dimensional course of the separating web on the plastics-material skin optionally results in a separation line extending accordingly in a three-dimensional manner between surface regions of different colour and/or patterning.

8. A sintering tool (1) for producing plastics-material skins by powder sintering, which has a moulding tool with a surface for receiving a resulting plastics-material skin and a sealing apparatus (8) for separating a partial region of the surface, wherein the moulding tool (1) has a separating web (2) on the surface along an edging of the partial region, and wherein the sealing apparatus (8) is constructed in the form of a mask (8) with a sealing edge (9), which mask (8) is to be fastened to the surface in such a way that the partial region is covered by the mask (8) and the sealing edge (9) rests against the separating web (2), **characterized in that** the sealing edge (9) is inflatable.

9. A sintering tool according to Claim 8, **characterized in that** the mask in the state fastened to the surface is fastened exclusively to the moulding tool.

10. A sintering tool according to one of Claims 8 and 9, **characterized in that** the separating web is undercut and forms a groove (5) which is open towards the partial region and in which the mask in the fastened state rests with the sealing edge against the separating web.

11. A sintering tool according to any one of Claims 8 to 10, **characterized in that** the moulding tool has a shell with a wall thickness of between 2 mm and 6 mm, preferably between 2 mm and 4 mm, in order to receive the resulting plastics-material skin.

12. A sintering tool according to any one of Claims 8 to 11, **characterized in that** the moulding tool has two walls, in order to guide a preferably liquid heating agent and/or cooling agent in a cavity between two walls.

13. A sintering tool according to any one of Claims 8 to 12, **characterized in that** it has at least one powder box onto which the moulding tool is capable of being placed, wherein the sintering tool is preferably mounted so as to be rotatable about a horizontal axis.

14. A sintering tool according to any one of Claims 8 to 13, **characterized in that** the moulding tool consists of nickel at least on the surface.

15. A sintering tool according to any one of Claims 8 to 14, **characterized in that** the sealing edge of the mask consists of silicone or a thermosetting elastomer.

16. A sintering tool according to any one of Claims 8 to 15, **characterized in that** the mask has a thickness of between 1 mm and 6 mm, preferably of between 2 mm and 4 mm, and/or the sealing edge in the inflated state has a thickness of between 5 mm and 20 mm, preferably of between 10 mm and 15 mm.

17. A sintering tool according to any one of Claims 8 to 16, **characterized in that** the separating web has a height of between 2 mm and 7 mm, preferably of between 3 mm and 5 mm, and/or a width of between 1 mm and 6 mm, preferably of between 2 mm and 4 mm.

18. A sintering tool according to any one of Claims 10 to 17, **characterized in that** the groove has a depth of between 0.2 mm and 2 mm, preferably of between 0·3 mm and 1 mm.

19. A sintering tool according to any one of Claims 8 to 18, **characterized in that** the surface has patternings which are different inside and outside the partial region.

20. A sintering tool according to any one of Claims 8 to 19, **characterized in that** the surface has a three-dimensional contour.

21. A sintering tool according to any one of Claims 8 to 20, **characterized in that** the separating web has a three-dimensional course.

## Revendications

1. Procédé de fabrication de peaux en matière plastique par frittage de poudre, dans lequel la poudre est appliquée sur un outil de moulage (1) pour former par frittage une peau en matière plastique, moyennant quoi une zone partielle de l'outil de moulage (1) est rendue inaccessible à la poudre par un dispositif d'étanchéité lors d'au moins une étape de pulvérisation, moyennant quoi l'outil de moulage présente par ailleurs le long d'une bordure de la zone partielle une nervure de séparation (2), et un masque (8) comportant un bord d'étanchéité (9) sert de dispositif d'étanchéité, le masque (8) prenant appui contre la nervure de séparation (2) par le bord d'étanchéité lors de la première étape de pulvérisation, et étant fixé exclusivement à l'outil de moulage (1), **caractérisé en ce que** le bord d'étanchéité (9) est expansible

2. Procédé de fabrication selon la revendication 1, **caractérisé en ce que** la première étape de pulvérisation est suivie d'au moins une autre étape de pulvérisation, de préférence pour la production d'une couche en matière plastique d'une couleur différente de celle d'une première couche en matière plastique produite par la première étape de pulvérisation, le masque étant enlevé pour ladite autre étape de pulvérisation.

3. Procédé de fabrication selon une des revendications 1 ou 2, **caractérisé en ce que** la nervure de séparation est en contre-dépouille et forme en conséquence une rainure (5) qui est ouverte en direction de la zone partielle et dans laquelle le bord d'étanchéité vient reposer lors de la première étape de pulvérisation.

4. Procédé de fabrication selon une des revendications 1 à 3, **caractérisé en ce que** l'outil de moulage est constitué de nickel au moins sur une surface recevant la peau en matière plastique à produire.

5. Procédé de fabrication selon une des revendications 1 à 4, **caractérisé en ce que** le bord d'étanchéité du masque est constitué de silicone ou d'un élastomère duroplastique.

6. Procédé de fabrication selon une des revendications 1 à 5, **caractérisé en ce que** la peau en matière plastique présente, en raison de grains différents d'une surface de l'outil de moulage recevant la peau en matière plastique à produire, des zones d'un grain différent à l'intérieur et à l'extérieur de la zone partielle.

7. Procédé de fabrication selon une des revendications 1 à 6, **caractérisé en ce qu'**en raison d'un contour tridimensionnel d'une surface de l'outil de moulage recevant la peau en matière plastique lors du frittage de la poudre, la peau en matière plastique adopte un contour tridimensionnel correspondant, moyennant quoi le cas échéant, en raison d'un profil tridimensionnel de la nervure de séparation, une ligne de séparation présentant un profil tridimensionnel correspondant est formée sur la peau en matière plastique entre des zones de surface de couleur et/ou de grain différent.

8. Outil de frittage (1) pour la production de peaux en matière plastique par frittage de poudre, lequel présente un outil de moulage comportant une surface destinée à recevoir une peau en matière plastique à produire, ainsi qu'un dispositif d'étanchéité (8) destiné à isoler une zone partielle de la surface, moyennant quoi l'outil de moulage (1) présente une nervure de séparation (2) sur la surface le long d'une bordure de la zone partielle, et moyennant quoi le dispositif d'étanchéité (8) est réalisé sous la forme d'un masque (8) comportant un bord d'étanchéité (9) et qui doit être fixé à la surface de telle manière que la zone partielle est recouverte par le masque (8) et que le bord d'étanchéité (9) prend appui contre la nervure de séparation (2), **caractérisé en ce que** le bord d'étanchéité (9) est expansible.

9. Outil de frittage selon la revendication 8, **caractérisé en ce que** le masque n'est fixé qu'à l'outil de moulage, lorsqu'il est fixé.

10. Outil de frittage selon une des revendication 8 ou 9, **caractérisé en ce que** la nervure de séparation est en contre-dépouille et forme une rainure (5) qui est ouverte en direction de la zone partielle et dans laquelle lorsqu'il est fixé, le masque prend appui par le bord d'étanchéité contre la nervure de séparation.

11. Outil de frittage selon une des revendications 8 à 10, **caractérisé en ce que** l'outil de moulage présente une coque d'une épaisseur de paroi comprise entre 2 mm et 6 mm, de préférence entre 2 mm et 4 mm, destinée à recevoir la peau en matière plastique à produire.

12. Outil de frittage selon une des revendications 8 à 11, **caractérisé en ce que** l'outil de moulage est à double paroi pour le passage d'un agent de chauffage et/ou un agent de refroidissement de préférence liquide dans un vide entre deux parois.

13. Outil de frittage selon une des revendications 8 à 12, **caractérisé en ce qu'**il présente au moins une caisse contenant la poudre et sur laquelle l'outil de moulage peut être installé, l'outil de frittage étant de préférence monté en rotation autour d'un axe horizontal.

14. Outil de frittage selon une des revendications 8 à 13, **caractérisé en ce que** l'outil de moulage est constitué de nickel au moins sur sa surface.

15. Outil de frittage selon une des revendications 8 à 14, **caractérisé en ce que** le bord d'étanchéité du masque est constitué de silicone ou d'un élastomère duroplastique.

16. Outil de frittage selon une des revendications 8 à 15, **caractérisé en ce que** le maque présente une épaisseur comprise entre 1 mm et 6 mm, de préférence entre 2 mm et 4 mm et/ou que le bord d'étanchéité présente à l'état expansé une épaisseur comprise entre 5 mm et 20 mm, de préférence entre 10 mm et 15 mm.

17. Outil de frittage selon une des revendications 8 à 16, **caractérisé en ce que** la nervure de séparation présente une hauteur comprise entre 2 mm et 7 mm, de préférence entre 3 mm et 5 mm et/ou une largeur comprise entre 1 mm et 6 mm, de préférence entre 2 mm et 4 mm.

18. Outil de frittage selon une des revendications 10 à 17, **caractérisé en ce que** la rainure présente une profondeur comprise entre 0,2 mm et 2 mm, de préférence entre 0,3 mm et 1 mm.

19. Outil de frittage selon une des revendications 8 à 18, **caractérisé en ce que** la surface présente des grains différents à l'intérieur et à l'extérieur de la zone partielle.

20. Outil de frittage selon une des revendications 8 à 19, **caractérisé en ce que** la surface présente un contour tridimensionnel.

21. Outil de frittage selon une des revendications 8 à 20, **caractérisé en ce que** la nervure de séparation présente un profil tridimensionnel.
